# EUROPEAN PATENT SPECIFICATION

(11) **EP 0 294 057 B1**
(45) Date of publication and mention of the grant of the patent: **28.07.1993**
(21) Application number: 88304439.8
(22) Date of filing: 17.05.1988
(51) Int. Cl.: C03B 7/10, C03B 9/40

(54) **Apparatus for controlling the shear mechanism of a glassware forming machine**
Vorrichtung zum Regeln des Abschneidescherenmechanismus einer Maschine zum Formen von Glasgegenständen
Appareil pour contrôler le mécanisme de ciseaux d'une machine de formage d'objets en verre

(30) Priority: 03.06.1987 US 57453; 21.07.1987 US 76239; 19.08.1987 US 87131
(43) Date of publication of application: 07.12.1988
(73) Proprietor: Emhart Glass Machinery Investments Inc., Wilmington, Delaware 19801 (US)
(72) Inventor: Gardner, Edward Boyd, Bloomfield Connecticut 06002 (US); Pinkerton, Steven J., Ridgefield Connecticut 06877 (US)
(74) Representative: Wetters, Basil David Peter

(56) References cited:
- US-A- 4 174 647
- US-A- 4 246 820
- US-A- 4 467 431

## Description

### BACKGROUND OF THE INVENTION

The invention relates generally to control systems for controlling the cyclical motion of fluidically driven members. More specifically, the invention relates to a control system for controlling straight-line shear for cutting gobs from a stream of molten glass in a glassware forming machine.

The use of shears for cutting gobs from a stream of molten glass falling from a feeder of a glassware forming machine is well-known in the prior art. Such shears are generally of either the arcuate or straight-line type, each type having a cyclically oscillating single pair of opposed blades associated with a single stream of molten glass. An example of a prior art double gob shear assembly of the straight-line type is shown in U.S. Patent No. 4,174,647, dated November 20, 1979, and assigned to the assignee of the present invention. Prior art shears are generally activated by pneumatic (or fluidic) means interconnected in a complex arrangement of various valves and cylinders.

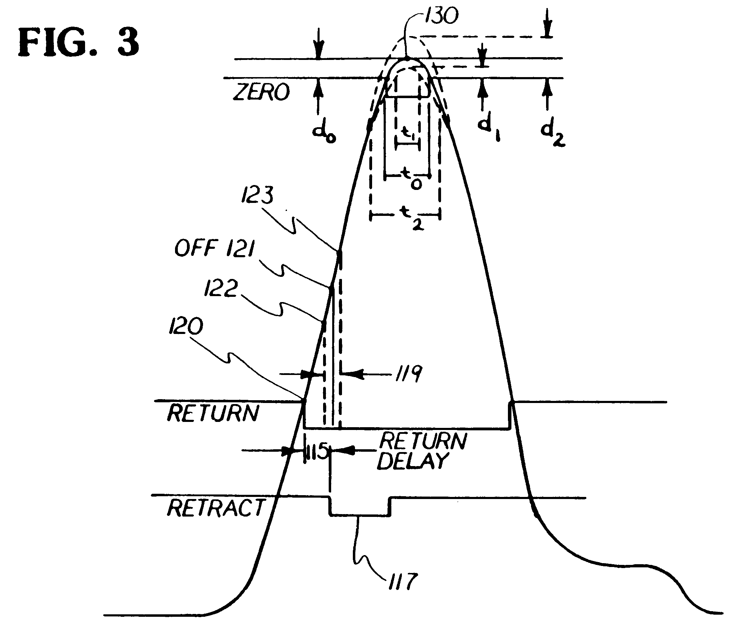

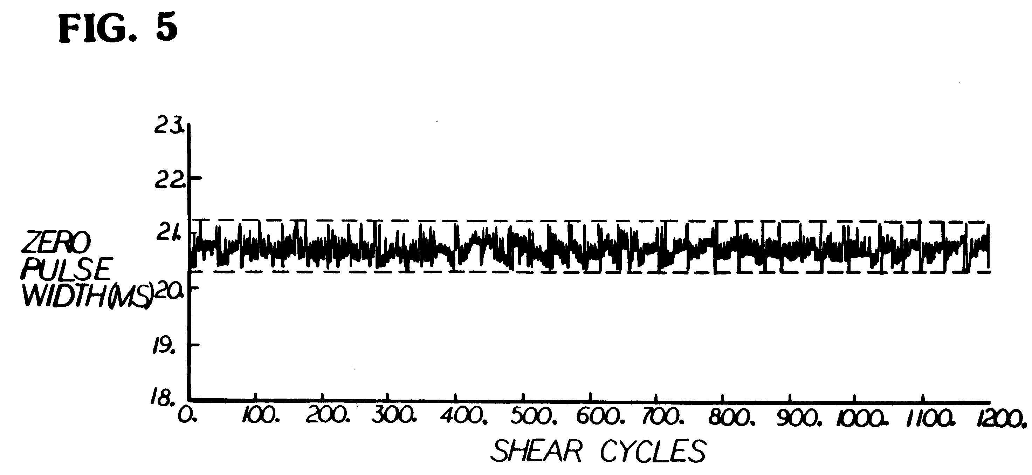

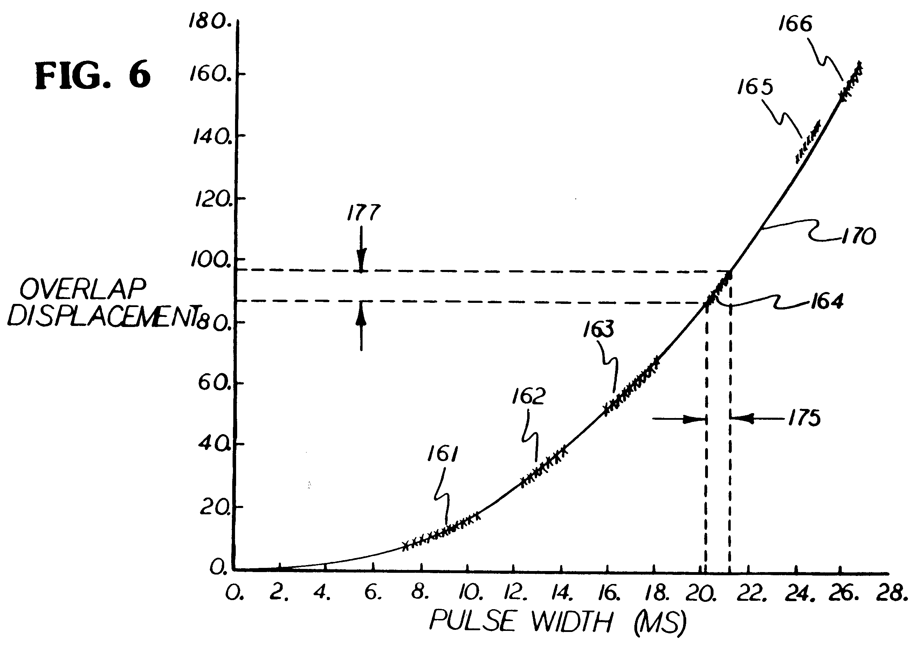

The present invention relates to an improvement over the prior art control system of commonly assigned U.S. Patent No. 4,467,431. Such patent discloses a control system for pneumatically driven straight-line shears (such as shears of the type disclosed in the '647 patent cited above), such control system incorporating a series of sensors which produce signals representing predetermined shear positions in each shear cycle. As illustrated in Figures 5 and 6 at the '431 patent and the text discussing these Figures, such prior art system incorporates four sensors - a return delay sensor, a zero crossover sensor, an overlap sensor, and a cushion sensor, each of which produces an output signal at a predetermined point of the travel of the shears, for controlling various aspects of the shears' operation in accordance with the method disclosed therein. The shears are pneumatically driven in the forward (cutting) and reverse direction by selectively energizing and deenergizing (or reversing) the cylinder assembly of Figure 3. The timing of this energization and deenergization, and hence the motion profile of the shears, is determined by the timing of the return sensor and overlap sensor signals, as well as by a return delay time which is added to the return sensor signal to determine the off time of the shears' pneumatic drive.

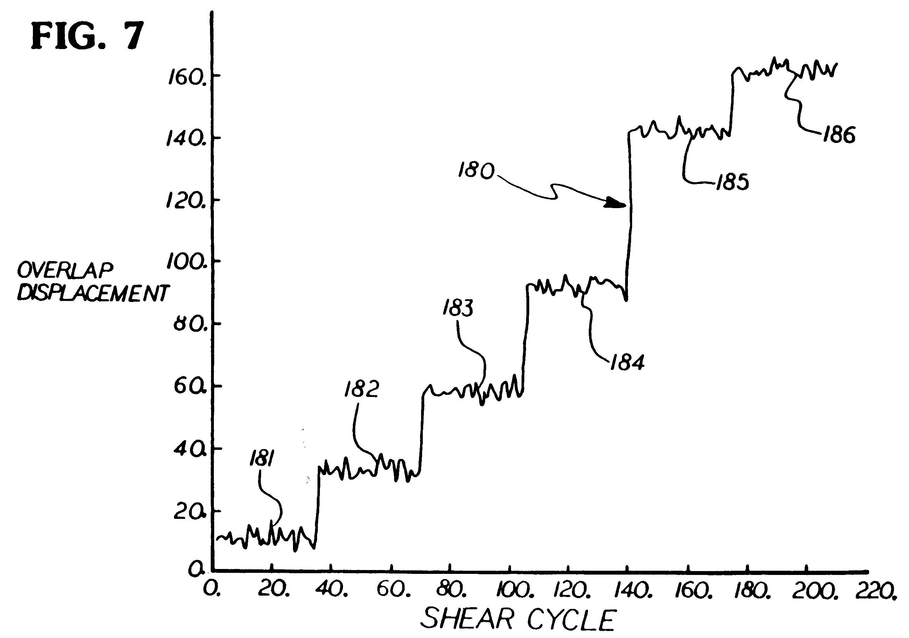

As illustrated in Figures 6 and 7 of the '431 patent and discussed at column 6, lines 17 and following, the return delay time is calculated by a circuit which incorporates an up/down counter, the count from which decrements or increments as a function of the overlap signal from the previous cycle. When an overlap sensor signal occurs (signifying that the shears have travelled at least as far as such sensor), a "count down" command is produced causing the return delay time to be decremented; the converse happens if such sensor is not triggered in the previous cycle. Although this system provided excellent performance as compared with prior art shears control systems, the continual incrementing and decrementing of the return delay time has imposed a limitation on the accuracy with which shears travel could be controlled.

As an improvement to the assignee's commercial system based upon the invention of the '431 patent, an additional, "excess overlap" sensor was included in the sensor housing in order to detect the travel of the shears blades beyond the desired point of maximum overlap to a predetermined point at which an alarm is triggered warning the operator that a reset of the drive electronics or other corrective action is required.

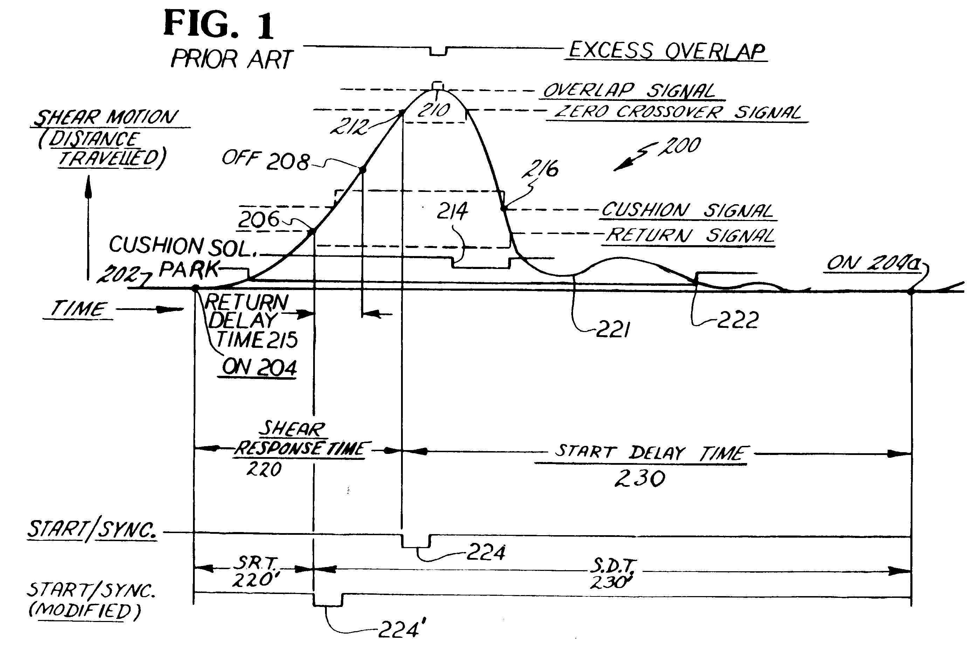

Another feature of such commercial system is shown in the prior art diagram, Figure 1 herein. Such system included a further ("park") sensor which detects the return of the shears to a given, small interval from the base-line, open position, and a "cushion delay" circuit which acts in cooperation with such part sensor to enable the operator to adjust the cushioning of the shears return stroke (actuation of cushioning valve). This drastically reduced the possibility of excessive impact in the system illustrated in the '431 patent. However, it required the operator to manually adjust a cushion delay during set-up and operation.

A further feature in which the assignee's commercial system somewhat departed from the '431 patent is the synchronization feature discussed above. The circuits of '431 Figures 8 and 9 were modified to synchronize the start time 220' to the leading edge of the return sensor signal (point 206 in Figure 1) rather than that of the zero crossover signal. This is illustrated by the "modified start/sync." timing diagram of Figure 1 hereto. In this modification, the shear response time 220' was measured from the on time 204 and the leading edge of the Return Sensor Signal, and the Start Delay Time 230' occupied the balance of the cycle. This arrangement improved the reliability of synchronization, in that point 206 is at a more uniformly increasing portion of the displacement profile. However, this system suffered the same shortcoming as encountered in that of the '431 patent -- i.e. that in the event of a significant shift of the speed of the mechanism from which the start pulse was obtained, such as a glass gob feeder assembly, the shears sometimes required hundreds of cycles to achieve the appropriate new Start Delay time.

Accordingly, it is the principal object of this invention to provide improved apparatus and method for controlling the operation of a fluidically driven shear mechanism, generally of the type disclosed in U.S. Patent No. 4,467,431.

The invention provides a control system for controlling the cyclical operation of fluidically driven shears for severing gobs from a stream of molten glass, comprising:
means for energizing said fluidic drive to cause said shears to move towards each other;
means for reversing said energizing means;
and
zero crossover sensor means for producing first and second signals at the respective times in each cycle when said shears pass their zero crossover positions;
characterised in that the system also comprises
means for defining a deadband period relative to said first signal; and
means for adjusting the time of reversing said energizing means if said second signal occurs outside of said deadband period.

The invention also provides a control system for controlling the cyclical operation of shears in glassware manufacturing apparatus, of the type including means for energizing said shears to cause them to move towards each other, a return sensor for producing a return signal output when said shears are at a first predetermined position in each cycle, a return delay timer responsive to said return signal output for producing a delayed output for reversing said energizing means, and a zero crossover sensor for producing first and second signals at the respective times in each cycle in which said shears pass their zero crossover positions, characterised in that the control system also comprises means for defining a deadband period relative to said first signal,
and
means for detecting whether or not said second signal occurs within said deadband period, and for adjusting the time of said delayed output in the event said second signal occurs outside of said deadband period.

Advantageously, means are provided for altering the deadband period. This adjustment can be both in the beginning of said deadband period, and the duration of such period.

Such control system may further include means for defining an "excessive bandwidth" period which is wider than the deadband period, and an alarm means for signalling to the operator if the second signal occurs outside of such excessive bandwidth period. The control system may further include means for defining a maximum time allowed between said first and second signals, and for disabling the energizing means if the second signal occurs after this time is exceeded .

The above and additional aspects of the invention are illustrated in the following detailed description of the preferred embodiment, which should be taken together with the drawings in which:
Figure 1 is a prior art graph of shear blade motion vs. time, for the shears control system of U.S. Patent No. 4,467,431 as improved subsequently to the filing of such patent.
Figure 2 is a circuit schematic diagram of a "deadband" control circuit in accordance with the invention;
Figure 3 is a graph of shear blade motion vs. time;
Figure 4 is a plot of the width of the zero crossover pulse over a number of cycles with no servocontrol of overlap;
Figure 5 is the pulse width of the zero crossover pulse over a number of cycles, with servocontrol.
Figure 6 is an interpolated plot of shears overlap displacement as related to the pulse width of the zero crossover pulse;
Figure 7 is a plot of displacement over a number of shear cycles, with various settings of the "deadband" circuit of Figure 2;
Reference should now be had to Figures 1 and 3, which respectively represent the characteristics of a prior art system, and the shears motion control characteristics of the present invention. These figures plot the distance travelled by the shears in the vertical axis, against time on the horizontal axis. The prior art plot of Figure 1 is quite similar to Figure 6 of U.S. Patent No. 4,467,431, but includes an additional Excess Overlap sensor signal which is issued in response to the shears travelling a certain distance beyond the desired overlap displacement. In Figure 1, 204 represents the "on" signal, 204a the next "on" signal, 206 the leading edge of the return sensor signal, 208 the turn-off point, i.e. the point at which cylinder assembly 33 must be reversed in order for the shears to just reach overlap point 210, 212 the zero crossover point, 214 the cushion solenoid, 215 the return delay time, 216 the cushion signal, 220 the shear response time, 221 a valley in the graph prior to a bounce between points 221 and 222 (222 being the point at which a park sensor is actuated), 224 a start/synchronisation signal, and 230 a start delay time. 224′ and 230′ illustrate alterations from the prior art 224 and 230. The significance of signals shown in Figure 1 and their functioning in regulating shears overlap displacement is disclosed in the '431 patent.

Figure 3 gives a shears motion profile characteristic in accordance with the present invention. The phenomenon underlying the present shear travel control technique is the empirically proven correlation between the pulse width of the Zero Crossover Signal (tₒ, t₁, or t₂) and the overlap displacement (dₒ, d₁, or d₂, respectively). Applicants have observed that these characteristics remain correlated within a small error over a large number of shears cycles; cf. discussion of Figure 6, below.

Reference is made in the specification and claims hereof to "first" and "second" signals indicating the respective times in each cycle in which the shears have passed their Zero Crossover position. In the preferred embodiment, such signals comprise the leading and trailing edges of the Zero Crossover pulse, respectively. However, it is certainly possible to employ other types of signals for this purpose.

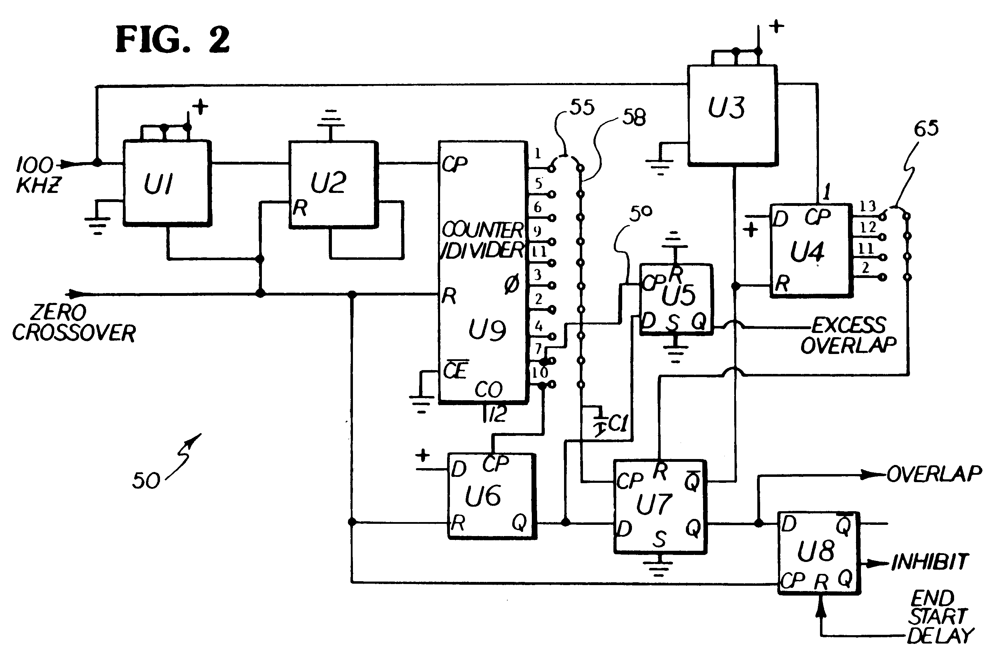

Referring now to Figure 2, there is shown a schematic view of a deadband control circuit 50 embodying the overlap control principles of the invention. As illustrated in Figure 3, the Zero Crossover signal is a pulse which goes low during the period of overlap of the shears. During this period, the counting/dividing system comprising elements U1, U2, U9, and U6 is released for counting. U1 and U2, respectively, divide the 100 KHz input signal by 100 (1 KHz out) and 2 (500 Hz out). (Similarly, frequency divider U3 provides a 1 KHz output signal). U9 is a five stage Johnson counter having ten decoded outputs (pins 3, 2, 4, 7, 10, 1, 5, 6, 9, and 11, respectively). In Figure 3, 115 represents the return delay, 117 the retract actuation pulse, 119 the interval in which the return delay may vary, 120 the return signal, 121 the "off" signal (start of actuation pulse 117) 122 and 123 the extremes of interval 119 and 130 the point of furthest shears travel. In an operative embodiment of the invention, element U9 comprised a CD4017B type counter/divider of Radio Corporation of America. The positive clock transitions at input CP advances the U9 counters one count every 2 milliseconds. At the end of five steps (10 milliseconds), output 10 goes high providing data for flip flops U5 and U7. On the next selected high to low transition (determined by the operator's setting of a jumper 55 from but 58) at the CP input to FF U7, shift register U4 is loaded. Illustratively, U4 consisted of a CD4015B type 4-stage shift register of Radio Corporation of America. The loading of U4, which has four parallel-output registers, permits these registers to advance one stage each millisecond. On the pulse selected by the setting of jumper 65, FF U7 is reset; thus FF U7 is set for 1, 2, 3, or 4 milliseconds.

The Return Delay Timer of the present invention is similar to that described in U.S. Patent No. 4,467,431, and in particular in Figure 7 and the specification starting at column 6, line 17. In the system of the present invention, the "Return Delay Timer" circuit 14 of '431 Figure 7 is modified by eliminating the Overlap Sensor-Optical coupler 252 input to FF 254, and replacing this with the Overlap signal from the circuit of Figure 2 of the present application. Additionally, the "count inhibit" input of up/down counter 225, which is connected to the common negative level in the prior art circuit of the '431 patent, is disconnected therefrom and connected to the Inhibit output of FF U8. The Overlap output of FF U7 provides a 1, 2, 3, or 5 msec pulse during which the adjustment direction of the "return delay" circuit is set for "down". If the Zero Crossover pulse ends (reverts to high) during the time FF U7 is set, FF U8 will be set and its Inhibit output will go high which inhibits the "return delay" counter from any change. Advantageously, in the event a correction of the return delay period is enabled, the circuit ('431 Figure 7) counts up or down by a time change 0.04 msec per cycle. This is a finer resolution than the 0.1 msec per cycle of the prior art. (cf. column 7, lines 27-30 of U.S. Patent No. 4,467,431). FF U8 is reset at the end of the "start delay" period, "ON" point 204 in Figure 7 for the next cycle.

Although the deadband circuit of Figure 2 is designed to operate in conjunction with the "Return Delay Timer" circuit similar to that of Figure 7 of U.S. Patent No. 4,467,431, it should be noted that the "deadband" principle of the present invention has broader applicability. That is, it may be used with other schemes for determining the deactuation time of a shears drive assembly, and not just the Return Sensor-Return Delay arrangement of U.S. Patent No. 4,467,431.

In the configuration of Figure 2, FF U5 is connected via line 59 to counter/divider U9 to be set on a count of 13 (26 milliseconds) and reset on the next count of 2 (4 msec.). The output of FF U5 provides an "Excess Overlap" signal at a predetermined duration of the Zero Overlap signal. Thus, if the Zero Crossover pulse width exceeds the predetermined value, i.e. its trailing edge occurs outside of a bandwidth period defined by this value, an "excess overlap" signal is generated. Naturally, this bandwidth period is wider than the deadband period. The circuit may incorporate a plurality of circuits of this type, e.g. to indicate whether the second signal occurs at an unduly early point (before the deadband period), or to have more than one "excess overlap" level -- perhaps one level which issues an alarm and another, higher, level which shuts the shears down. Each of these would utilize appropriate jumper settings, as discussed below with reference to Figure 6.

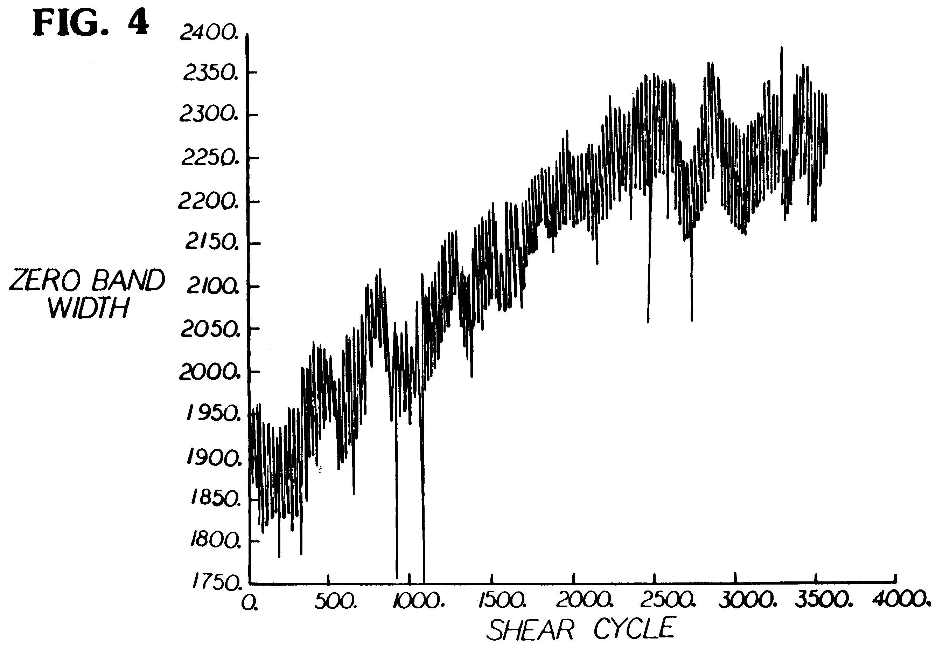

The technique of the invention makes use of the observed tendency of pneumatically driven straight line shears of the type shown in commonly assigned U.S. Patent No. 4,174,647, to exhibit a well defined range of Zero Crossover values. Figure 4 shows that over a large number of shears cycles, during which the Zero Crossover pulse width drifted upwards due to friction, wear, and other factors, this signal followed a natural bandwidth on the order of 1 millisecond. During these measurements, the shears were not subject to servocontrol of overlap displacement. This natural bandwidth provides a good basis for setting the "deadband" period in the circuit of Figure 2, by indicating how "tight" a control over Zero Crossover is compatible with the natural properties of the system.

Figure 5 illustrates Zero Crossover pulse width measurements taken over a number of shears cycles using the circuit of Figure 1 for servocontrol of Zero pulse width, with the jumper 65 set for a 1 msec. deadband interval, and a 0.04 msec. time change. The Zero Crossover pulse width varied as shown between upper and lower boundaries of 21.2 msec. and 20.3 msec. -- a bandwidth of 0.9 msec. With reference to Figure 3, this corresponds to a variation of the Return Delay within interval 119, and a variation of the OFF point (start of actuation pulse 117 for the Retract solenoid) between extremes 122 and 123.

Figure 6 plots pulse width against overlap displacement, (in units of .001 inches (.0025 cms)), and shows a curve fit to various groups 161-166 of readings taken over a large number of cycles with the "deadband" circuit of Figure 2, each group corresponding to a different setting of the jumper 55 and extending over distinct ranges of pulse width, e.g. 175, and overlap displacement e.g. 177. The regular pattern of these readings permits the fitting of a curve 170 which provides a well defined correlation between Zero pulse width and overlap displacement. Thus, it is possible to design the pulse width characteristics of a deadband control circuit such as that of Figure 2 in accordance with known overlap displacement characteristics. This can be used to set "excess overlap" Zero Crossover pulse widths at which an alarm can be provided, or more extreme values at which the system should be shut down (the Excess Overlap signal from FF U5 of Figure 2 is designed to shut the system down), taking into account prior knowledge of suitable overlap displacements for these actions. On receiving an "excess overlap" alarm, the operator can reset the "deadband" circuit to test whether the problem arises from the drive electronics vs. a valve malfunction or the like.

Figure 7 shows overlap displacement variation 180 over a number of shears cycles, at successive settings of the jumper 55 (Figure 2). The units on the axes are the same as in Figure 6. 181 to 186 represent readings at different settings of the jumper 55. This clearly illustrates the flexibility of the operator's control over overlap displacement using the circuit of Figure 2.

Applicants have observed that tracking Zero Crossover pulse widths during ongoing operation of the shears provides an excellent basis for diagnosing system performance. One may correlate the "signatures" of the Zero Crossover values with various types of fluidic drive malfunctions (faulty valves, piston seal leakage, etc.) and other problems, and use this to alert the operator to problems in advance of any serious impairment.

## Claims

1. A control system for controlling the cyclical operation of fluidically driven shears for severing gobs from a stream of molten glass, comprising:
means (50, 554) for energizing said fluidic drive (33) to cause said shears to move towards each other;
means (50, 554) for reversing said energizing means;
and
zero crossover sensor means for producing first and second signals at the respective times in each cycle when said shears pass their zero crossover positions;
characterised in that the system also comprises
means (U1, U2, U9) for defining a deadband period relative to said first signal; and
means (U3, U4, U6, U7, U8) for adjusting the time of reversing said energizing means if said second signal occurs outside of said deadband period.

2. A control system as defined in claim 1, characterised in that said adjusting means delays the operation of said reversing means if said second signal occurs before said deadband period, and advances the time of operation of said reversing means if said second signal occurs after said deadband period.

3. A control system for controlling the cyclical operation of shears in glassware manufacturing apparatus, of the type including means (33) for energizing said shears to cause them to move towards each other, a return sensor for producing a return signal output when said shears are at a first predetermined position in each cycle, a return delay timer responsive to said return signal output for producing a delayed output for reversing said energizing means, and a zero crossover sensor for producing first and second signals at the respective times in each cycle in which said shears pass their zero crossover positions, characterised in that the control system also comprises means (U1, U2, U9) for defining a deadband period relative to said first signal, and
means (U3, U4, U6, U7, U8) for detecting whether or not said second signal occurs within said deadband period, and for adjusting the time of said delayed output in the event said second signal occurs outside of said deadband period.

4. A control system as defined in any one of claims 1 to 3, characterised in that the system further comprises operator-adjustable means for altering said deadband period, e.g. said altering means shifts the beginning of the deadband period relative to the first signal, or changes the duration of the deadband period.

5. A control system as defined in any one of claims 1 to 4, characterised in that the system also comprises means (U1, U2, U9) for defining an excessive bandwidth period which is wider than said deadband period, and alarm means (U5) for signalling to the operator if the second signal occurs outside of the excessive bandwidth period.

6. A control system as defined in any one of claims 1 to 5, characterised in that the system further comprises means (U1, U2, U9, U5) for defining a maximum permitted time between said first and second signals, wherein if said second signal occurs after said first signal by more than this maximum permitted time, the energizing means is disabled.

## Patentansprüche

1. Regel-/Steuersystem zum Regeln/Steuern des zyklischen Betriebs fluidgetriebener Scheren zum Abtrennen von Tropfen aus einem Strom geschmolzenen Glases, aufweisend:
eine Einrichtung (50) zur Aktivierung des Fluidantriebs (33), um die Scheren zu veranlassen, sich aufeinanderzu zu bewegen;
eine Einrichtung (50) zur Umkehrung der Aktivierungseinrichtung; und
eine Nulldurchgangs-Sensoreinrichtung zur Erzeugung erster und zweiter Signale zu den jeweiligen Zeitpunkten während jedes Zyklus, wenn die Scheren ihre Nulldurchgangs-Positionen passieren;
**dadurch gekennzeichnet, daß**
das System weiter aufweist:
eine Einrichtung (U1, U2, U9) zur Definition einer Totzeit-Periode in bezug auf das erste Signal; und
eine Einrichtung (U3, U4, U6, U7, U8) zur Adjustierung des Zeitpunktes der Umkehr der Aktivierungseinrichtung, wenn das zweite Signal außerhalb der Totzeit-Periode erscheint.

2. Regel-/Steuersystem nach Anspruch 1, dadurch gekennzeichnet, daß die Adjustierungseinrichtung den Betrieb der Umkehreinrichtung verzögert, wenn das zweite Signal vor der Totzeit-Periode erscheint, und den Zeitpunkt des Betriebs der Umkehreinrichtung vorverlegt, wenn das zweite Signal nach der Totzeit-Periode erscheint.

3. Regel-/Steuersystem zum Regeln/Steuern des zyklischen Betriebs von Scheren in einer Vorrichtung zur Herstellung von Glasgegenständen in einer Ausführungsform, die eine Einrichtung (33) zur Aktivierung der Scherenblätter, um diese zu veranlassen, sich aufeinanderzu zu bewegen, einen Rückkehr-Sensor zur Erzeugung der Ausgabe eines Rückkehrsignals, wenn die Scheren sich in einer ersten vorbestimmten Lage während jedes Zyklus befinden, einen auf die Ausgabe des Rückkehrsignals ansprechenden Rückkehr-Verzögerungs-Zeitgebers zur Erzeugung einer verzögerten Ausgabe des Signals zur Umkehr der Aktivierungseinrichtung und einen Nulldurchgangs-Sensor zur Erzeugung erster und zweiter Signale zu den jeweiligen Zeitpunkten während jedes Zyklus, in denen die Scheren ihre Nulldurchgangs-Positionen passieren, beinhaltet, dadurch gekennzeichnet, daß das Regel/Steuersystem eine Einrichtung (U1, U2, U9) zur Definition einer Totzeit-Periode in bezug auf das erste Signal und eine Einrichtung (U3, U4, U6, U7, U8) aufweist, um festzustellen, ob das zweite Signal innerhalb der Totzeit-Periode erscheint oder nicht, und um den Zeitpunkt der verzögerten Signalausgabe in dem Fall zu adjustieren, daß das zweite Signal außerhalb der Totzeit-Periode erscheint.

4. Regel-/Steuersystem nach einem der Ansprüche 1 bis 3, dadurch gekennzeichnet, daß das System eine durch die Bedienungsperson einstellbare Einrichtung zur Änderung der Totzeit-Periode aufweist, z.B. daß die Änderungseinrichtung den Beginn der Totzeit-Periode in bezug auf das erste Signal verschiebt oder die Zeitdauer der Totzeit-Periode ändert.

5. Regel-/Steuersystem nach einem der Ansprüche 1 bis 4, dadurch gekennzeichnet, daß das System eine Einrichtung (U1, U2, U9) zur Definition einer Über-Bandbreiten-Periode, die größer ist als die Totzeit-Periode, und eine Alarmeinrichtung (U5) aufweist, um der Bedienungsperson anzuzeigen, wenn das zweite Signal außerhalb der Über-Bandbreiten-Periode erscheint.

6. Regel-/Steuersystem nach einem der Ansprüche 1 bis 5, dadurch gekennzeichnet, daß das System eine Einrichtung (U1, U2, U9, U5) zur Definition einer maximal erlaubten Zeitspanne zwischen dem ersten und dem zweiten Signal aufweist, wobei die Aktivierungseinrichtung außer Betrieb gesetzt wird, wenn das zweite Signal um mehr als diese maximal zulässige Zeitspanne nach dem ersten Signal erscheint.

## Revendications

1. Système de commande pour commander le fonctionnement cyclique de cisailles à commande fluidique pour séparer des paraisons d'un écoulement de verre fondu, comprenant :
des moyens (50,554) pour exciter ladite unité de commande fluidique (33) pour qu'elle rapproche lesdites cisailles l'une de lautre ;
des moyens (50,554) pour inverser lesdits moyens d'excitation; et
des moyens de détection de passage par zéro pour produire des premier et second signaux aux instants respectifs de chaque cycle, lorsque lesdites cisailles franchissent leurs positions de passage par zéro;
caractérisé en ce que le système comporte également
des moyens (U1,U2,U9) pour définir une période de zone morte concernant ledit premier signal; et
des moyens (U3,U4,U6,U7,U8) pour régler l'instant d'inversion desdits moyens d'excitation si ledit second signal apparaît à l'extérieur de ladite période de zone morte.

2. Système de commande selon la revendication 1, caractérisé en ce que lesdits moyens de réglage retardent l'actionnement desdits moyens d'inversion si ledit second signal apparaît avant ladite période de zone morte, et avancent l'instant d'actionnement desdits moyens d'inversion si ledit second signal apparaît après ladite période de zone morte.

3. Système de commande pour commander le fonctionnement cyclique de cisailles dans un dispositif de fabrication d'articles en verre, du type comportant des moyens (33) pour activer lesdites cisailles de manière à les rapprocher l'une de l'autre, un capteur de retour pour produire un signal de retour délivré lorsque lesdites cisailles sont dans une première position prédéterminée lors de chaque cycle, une minuterie de retardement du retour, qui est sensible audit signal de sortie de retour pour produire un signal de sortie retardé pour inverser lesdits moyens d'excitation, et un capteur de passage par zéro servant à produire des premier et second signaux aux instants respectifs de chaque cycle, auxquels lesdites cisailles passent par leurs positions de passage par zéro, caractérisé en ce que le système de commande comporte également
des moyens (U1,U2,U9) pour définir une période de zone morte par rapport audit premier signal, et
des moyens (U3,U4,U6,U7,U8) pour détecter si ledit second signal apparaît ou non dans ladite période de zone morte et pour régler l'instant de délivrance dudit signal de sortie retardé dans le cas où ledit second signal apparaît à l'extérieur de ladite période de zone morte.

4. Système de commande selon l'une quelconque des revendications 1 à 3, caractérisé en ce que le système comprend en outre des moyens réglables par l'opérateur et servant à modifier ladite période de zone morte, par exemple lesdits moyens de modification décalent le début de la période de zone morte par rapport au premier signal, ou modifient la durée de la période de zone morte.

5. Système de commande selon l'une quelconque des revendications 1 à 4, caractérisé en ce que le système comporte également des moyens (U1,U2,U9) pour définir une période de largeur de bande excessive, qui est plus étendue que ladite période de zone morte, et des moyens d'alarme (U7) pour signaler à l'opérateur si le second signal apparaît à l'extérieur de la période de largeur de bande excessive.

6. Système de commande selon l'une quelconque des revendications 1 à 5, caractérisé en ce que le système comporte en outre des moyens (U1,U2,U9,U5) pour définir un intervalle de temps maximum autorisé entre lesdits premier et second signaux, les moyens d'excitation étant invalidés si ledit second signal apparaît après ledit premier signal en en étant séparé de plus d'un intervalle de temps maximum autorisé.
